# NEW EUROPEAN PATENT SPECIFICATION

(11) **EP 2 185 659 B2**
(45) Date of publication and mention of the opposition decision: **22.01.2020**
(45) Mention of the grant of the patent: 22.03.2017
(21) Application number: 08756274.0
(22) Date of filing: 27.05.2008
(51) Int. Cl.: C09D 4/00, C08G 18/00

(54) **METHOD OF COATING A SUBSTRATE WITH A RADIATION AND CHEMICALLY CURABLE COATING COMPOSITION**
VERFAHREN ZUR BESCHICHTUNG EINES SUBSTRATS MIT EINEM STRAHLENMÄSSIG UND CHEMISCH HÄRTBAREN BESCHICHTUNGSSTOFF
PROCÉDÉ DE REVÊTEMENT D'UN SUBSTRAT À L'AIDE D'UN RAYONNEMENT ET COMPOSITION DE REVÊTEMENT CHIMIQUEMENT DURCISSABLE

(30) Priority: 17.08.2007 US 840282
(43) Date of publication of application: 19.05.2010
(73) Proprietor: PPG Industries Ohio, Inc., Cleveland, OH 44111 (US)
(72) Inventor: BOWMAN, Mark P., New Kensington, Pennsylvania 15068 (US)
(74) Representative: f & e patent
(86) International application number: PCT/US2008/064825
(87) International publication number: WO 2009/025901

(56) References cited:
- WO-A1-2006/052725
- US-A- 4 031 271
- US-A- 4 234 676
- US-A1- 2005 027 082
- US-A1- 2007 142 603
- US-B1- 6 551 710
- US-B1- 6 639 046
- Anonymous: "Thiol-ene reaction", Wikipedia Wikipedia, pages 1-5, XP055446982, Retrieved from the Internet: URL:https://en.wikipedia.org/w/index.php?t itle=Thiol-ene_reaction&oldid=779361114 [retrieved on 2018-02-01]
- Hoyle, Et Al: "Thiol-En-Klickchemie", Angew. Chem., vol. 122, 1 January 2010 (2010-01-01), pages 1584-1617, XP055446987,
- Anonymous: "UV curing", wikipedia wikipedia, pages 1-3, XP055446991, [retrieved on 2018-02-01]
- Helmut Fobbe: "trochnungs-und hartungsverfahren" In: "Kittel Lehrbuch der Lacke und Beschichtungen", 1 January 2004 (2004-01-01), XP055446993, pages 414-416,
- WEI, JUN ET AL: "ESR and photoplymerization study of polymerizable benzophenone photoinitiators containing functional maleimide groups", e-Polymers, no. 112, 27 August 2008 (2008-08-27), pages 1-12, ISSN: 1618-7229
- comparative tests

## Description

### FIELD OF THE INVENTION

The present invention relates to a method of forming a cured coating on a substrate which involves depositing a coating composition on a substrate and curing the coating composition by a dual mechanism involving exposure to radiation and by a Michael addition reaction.

### BACKGROUND OF THE INVENTION

Radiation curing of automotive refinish compositions is becoming of increasing interest for use in body fillers, primers, surfacers and topcoats. The advantages of radiation curing are that it is quick, can be conducted at ambient temperature, and radiation-curable compositions can be formulated at high solids content, which is environmentally desirable. However, a problem in coating automobile bodies with radiation-curable compositions lies in the curing of areas not directly accessible to radiation such as shadow zones, for example, cavities, folds and other undercuts resulting from the automotive manufacturing process. Also, pigmented coating compositions may contain pigments that absorb radiation such as carbon black and titanium dioxide resulting in insufficient radiation to cure the resinous film-forming binder. Finally, low energy radiation such as ultraviolet radiation in the 200-400 nanometer wavelength range, although effective for curing thin coatings, is not particularly effective in curing the interior regions of thick coatings. Documents US 2005/0027082, US 2007/0142603 and US 4 031 271 relate to coating composition cured via irradiation.

Therefore, it would be desirable to have a coating composition that cures well when exposed to radiation and also cures via an alternate curing mechanism when radiation is insufficient to bring about complete cure.

### SUMMARY OF THE INVENTION

The present invention provides a process according to claims 1 to 13 for forming a coating on a substrate.

### DETAILED DESCRIPTION OF EMBODIMENTS OF THE INVENTION

Accordingly, unless indicated to the contrary, the numerical parameters set forth in the following specification and attached claims are approximations that may vary depending upon the desired properties to be obtained by the present invention. At the very least, and not as an attempt to limit the application of the doctrine of equivalents to the scope of the claims, each numerical parameter should at least be construed in light of the number of reported significant digits and by applying ordinary rounding techniques. Notwithstanding that the numerical ranges and parameters setting forth the broad scope of the invention are approximations, the numerical values set forth in the specific examples are reported as precisely as possible. Any numerical value, however, inherently contains certain errors necessarily resulting from the standard variation found in their respective testing measurements.

Also, it should be understood that any numerical range recited herein is intended to include all sub-ranges subsumed therein. For example, a range of "1 to 10" is intended to include all sub-ranges between (and including) the recited minimum value of 1 and the recited maximum value of 10, that is, having a minimum value equal to or greater than 1 and a maximum value of equal to or less than 10.

In this application, the use of the singular includes the plural and plural encompasses singular, unless specifically stated otherwise. In addition, in this application, the use of "or" means "and/or" unless specifically stated otherwise, even though "and/or" may be explicitly used in certain instances.

The term "polymer" is also meant to include copolymer and oligomer.

Acrylic and methacrylic are designated as (meth)acrylic.

Aliphatic and cycloaliphatic are designated as (cyclo)aliphatic.

The term "radiation" means free radical generating radiation.

The term "Michael addition" means a thio-Michael addition in which a compound with -SH functionality adds to a double bond.

Suitable polyenes for use in the present invention are numerous and can vary widely. Such polyenes can include those that are known in the art. Non-limiting examples of suitable polyenes can include those that are represented by the formula:

A-(X)ₘ

wherein A is an organic moiety, m is an integer of at least 2, and X is an olefinically unsaturated moiety containing an electron withdrawal group, and m is at least 2, typically 2 to 4. Examples of X are groups of the following structure: 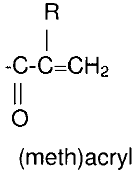 wherein each R is a radical selected from H and methyl. Other electron withdrawal groups can be utilized such as carboxyl, nitrile, amide and sulfonyl.

The polyenes may be compounds or polymers having in the molecule olefinic double bonds that are polymerizable by exposure to radiation and are reactive with thiol compounds via a Michael addition reaction. Examples of such materials are (meth)acrylic-functional (meth)acrylic copolymers, epoxy resin (meth)acrylates, polyester (meth)acrylates, polyether (meth)acrylates, polyurethane (meth)acrylates, amino (meth)acrylates, silicone (meth)acrylates, and melamine (meth)acrylates. The number average molar mass (Mn) of these compounds is preferably around 200 to 10,000. The molecule preferably contains on average 2 to 20 olefinic double bonds that are polymerizable by exposure to radiation. The (meth)acrylates may be aromatic or (cyclo)aliphatic (meth)acrylates. The binders may be used singly or in mixture.

Specific examples of polyurethane (meth)acrylates are reaction products of the polyisocyanates such as 1,6-hexamethylene diisocyanate and/or isophorone diisocyanate including isocyanurate and biuret derivatives thereof with hydroxyalkyl (meth)acrylates such as hydroxyethyl (meth)acrylate and/or hydroxypropyl (meth)acrylate. The polyisocyanate can be reacted with the hydroxyalkyl (meth)acrylate in a 1:1 equivalent ratio or can be reacted with and NCO/OH equivalent ration greater than 1 to form an NCO-containing reaction product that can then be chain extended with a polyol such as a diol or triol, for example 1,4-butane diol, 1,6-hexane diol and/or trimethylol propane. Examples of polyester (meth)acrylates are the reaction products of (meth)acrylic acid or anhydride with polyols, such as diols, triols and tetraols, including alkylated polyols, such as propoxylated diols and triols. Examples of polyols include 1,4-butane diol, 1,6-hexane diol, neopentyl glycol, trimethylol propane, pentaerythritol and propoxylated 1,6-hexane diol. Specific examples of polyester (meth)acrylate are glycerol tri(meth)acrylate, trimethylolpropane tri(meth)acrylate, pentaerythritol tri(meth)acrylate and pentaerythritol tetra(meth)acrylate.

As used herein the term "polythiol functional material" or "polythiol" refers to polyfunctional materials containing two or more thiol functional groups (SH). Suitable polythiols for use in forming the radiation curable topcoat composition are numerous and can vary widely. Such polythiol functional materials can include those that are known in the art. Non-limiting examples of suitable polythiol functional materials can include, but are not limited to, polythiols having at least two thiol groups including compounds and polymers. The polythiol can have ether linkages (-O-), sulfide linkages (-S-), including polysulfide linkages (-Sₓ-), wherein x is at least 2, such as from 2 to 4, and combinations of such linkages.

The polythiols for use in the present invention include, but are not limited to, materials of the formula:

R₁-(SH)ₙ

wherein R₁ is a polyvalent organic moiety and n is an integer of at least 2, typically 2 to 6.

Non-limiting examples of suitable polythiols include, but are not limited to, esters of thiol-containing acids of the formula HS-R₂-COOH wherein R₂ is an organic moiety with polyhydroxy compounds of the structure R₃-(OH)ₙ wherein R₃ is an organic moiety and n is at least 2, typically 2 to 6. These components can be reacted under suitable conditions to give polythiols having the general structure: 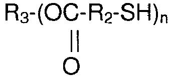 wherein R₂, R₃ and n are as defined above.

Examples of thiol-containing acids are thioglycolic acid (HS-CH₂COOH), α-mercaptopropionic acid (HS-CH(CH₃)-COOH) and β-mercaptopropionic acid (HS-CH₂CH₂COCH) with polyhydroxy compounds such as glycols, triols, tetraols, pentaols, hexaols, and mixtures thereof. Other non-limiting examples of suitable polythiols include, but are not limited to, ethylene glycol bis (thioglycolate), ethylene glycol bis(β-mercaptopropionate), trimethylolpropane tris (thioglycolate), trimethylolpropane tris (β-mercaptopropionate), pentaerythritol tetrakis (thioglycolate) and pentaerythritol tetrakis (β-mercaptopropionate), and mixtures thereof.

Typically, the polyene is present in the clear topcoat composition in amounts of 80 to 90, more typically 90 to 95 percent by weight, and the polythiol material is typically present in amounts of 2 to 20, more usually 5 to 10 percent by weight. The percentages by weight are based on total weight of polyene and polythiol.

The curable composition also contains a Michael addition catalyst. Examples of suitable catalysts include primary, secondary and tertiary amines and quaternary ammonium compounds. Specific examples include isophorone diamine, butylamine, n-octylamine, n-nonylamine, N,N'-diethylamine-propyl-3-amine, aniline, dioctylamine, triethylamine and tetramethylguanidine. Also, blocked primary and secondary amines such as those mentioned above reacted with an aldehyde and/or a ketone to form an aldamine and/or a ketimine may be used.

The amount of the Michael addition catalyst present in the curable composition is typically from 0.001 to 5 percent, preferably 0.05 to 0.3 percent by weight based on weight of the polyene and polythiol.

The curable composition may contain a photoinitiator when exposed to ultraviolet radiation. Suitable photoinitiators are, for example, those that absorb within the wavelength range of 190 to 600 nm.

Examples of photoinitiators for radiation systems are benzoin and benzoin derivatives, acetophenone, and acetophenone derivatives such as, for example, 2,2-diacetoxyacetophenone, benzophenone and benzophenone derivatives, thioxanthone and thioxanthone derivatives, anthraquinone, 1-benzoylcyclohexanol, organophosphorus compounds such as, for example, acyl phosphine oxides. The photoinitiators when present are used in quantities of, for example, from 0.1 to 7 wt. %, preferably 0.5 to 5 wt. %, with reference to the weight of polyene and polythiol and photoinitiators. The photoinitiators may be used singly or in combination.

The curable composition optionally contains customary additives that are present in the coating composition. These include rheology control agents, anti-foaming agents and hindered amine light stabilizers and ultraviolet absorbers, adhesion promoting agents and corrosion inhibiting wetting agents. These optional ingredients are present in amounts up to 10, and preferably no more than 5 percent by weight based on weight of the topcoating composition.

The curable composition used in the content according to the invention may contain diluents such as organic solvents and/or water. However, preferably the compositions are 100 percent solids. Examples of suitable organic solvents are mono- or polyhydric alcohols, e.g., ethylene glycol and butanol, and glycol ethers or esters, e.g., diethylene glycol dialkyl ethers containing a C₁ to C₆ alkyl. When present, the diluents constitute up to 50 percent by weight of the curable composition based on weight of the composition.

The curable composition may also contain pigments and/or colorants that are soluble in the coating composition such as dyes. These ingredients, if present, are present in the composition in amounts of up to 50%, typically up to 30 percent by weight based on weight of the curable composition.

As used herein, the term "colorant" means any substance that imparts color and/or other opacity and/or other visual effect to the composition. The colorant can be added to the coating in any suitable form, such as discrete particles, dispersions, solutions and/or flakes. A single colorant or a mixture of two or more colorants can be used.

Example colorants include pigments, dyes and tints, such as those used in the paint industry and/or listed in the Dry Color Manufacturers Association (DCMA), as well as special effect compositions. A colorant may include, for example, a finely divided solid powder that is insoluble but wettable under the conditions of use. A colorant can be organic or inorganic and can be agglomerated or non-agglomerated. Colorants can be incorporated into the coatings by grinding or simple mixing. Colorants can be incorporated by grinding into the coating by use of a grind vehicle, the use of which will be familiar to one skilled in the art.

Example pigments and/or pigment compositions include, but are not limited to, carbazole dioxazine crude pigment, azo, monoazo, disazo, naphthol AS, salt type (lakes), benzimidazolone, metal complex, isoindolinone, isoindoline and polycyclic phthalocyanine, quinacridone, perylene, perinone, diketopyrrolo pyrrole, thioindigo, anthraquinone, indanthrone, anthrapyrimidine, flavanthrone, pyranthrone, anthanthrone, dioxazine, triarylcarbonium, quinophthalone pigments, diketo pyrrolo pyrrole red ("DPPBO red"), and mixtures thereof. The terms "pigment" and "colored filler" can be used interchangeably.

Example dyes include, but are not limited to, those that are solvent based such as pthalo green or blue, iron oxide, bismuth vanadate, anthraquinone, perylene and quinacridone.

As noted above, the colorant can be in the form of a dispersion including, but not limited to, a nanoparticle dispersion. Nanoparticle dispersions can include one or more highly dispersed nanoparticle colorants and/or colorant particles that produce a desired visible color and/or opacity and/or visual effect. Nanoparticle dispersions can include colorants such as pigments or dyes having a particle size of less than 150 nm, such as less than 70 nm, or less than 30 nm. Nanoparticles can be produced by milling stock organic or inorganic pigments with grinding media having a particle size of less than 0.5 mm. Example nanoparticle dispersions and methods for making them are identified in U.S. Patent No. 6,875,800 B2.
Nanoparticle dispersions can also be produced by crystallization, precipitation, gas phase condensation, and chemical attrition (i.e., partial dissolution). In order to minimize re-agglomeration of nanoparticles within the coating, a dispersion of resin-coated nanoparticles can be used. As used herein, a "dispersion of resin-coated nanoparticles" refers to a continuous phase in which is dispersed discreet "composite microparticles" that comprise a nanoparticle and a resin coating on the nanoparticle. Example dispersions of resin-coated nanoparticles and methods for making them are identified in U.S. Application No. 10/876,031 filed June 24, 2004, and U.S. Provisional Application No. 60/482,167 filed June 24, 2003.

Example special effect compositions that may be used include pigments and/or compositions that produce one or more appearance effects such as reflectance, pearlescence, metallic sheen, phosphorescence, fluorescence, photochromism, photosensitivity, thermochromism, goniochromism and/or color-change. Additional special effect compositions can provide other perceptible properties, such as reflectivity, opacity or texture. In a non-limiting embodiment, special effect compositions can produce a color shift, such that the color of the coating changes when the coating is viewed at different angles. Example color effect compositions are identified in U.S. Patent No. 6,894,086. Additional color effect compositions can include transparent coated mica and/or synthetic mica, coated silica, coated alumina, a transparent liquid crystal pigment, a liquid crystal coating, and/or any composition wherein interference results from a refractive index differential within the material and not because of the refractive index differential between the surface of the material and the air.

The compositions are typically cured at ambient temperature and exposure to radiation. The radiation can be high-energy radiation or actinic radiation.

A class of high-energy bombardment includes energetic electrons such as those derived from isotopes such as strontium-90, or intense electron beams produced by particle accelerators. Electron beam curing is most useful in applications where very rapid and economical rates are desired. By way of example, in some systems curing periods of less than about one second may be experienced using a total radiation dose of less than 0.25 megarads.

A class of actinic radiation useful herein is ultraviolet light and other forms of actinic radiation which are normally found in radiation emitted from the sun or from artificial sources such as Type RS Sunlamps, carbon arc lamps, xenon arc lamps, mercury vapor lamps, tungsten halide lamps.
Ultraviolet radiation may be used most efficiently if the photocurable polyene/polythiol composition contains a suitable photocuring rate accelerator. Curing periods may be adjusted to be very short and hence commercially economical by proper choice of ultraviolet source, photocuring rate accelerator and concentration thereof, temperature and molecular weight, and reactive group functionality of the polyene and polythiol. Curing periods of from 1 second to 15 minutes are typical.

Preferably, for safety reasons, low energy ultraviolet radiation falling within the 200-400 nanometer wavelength interval is preferred. Preferably, the ratio of UV-B content to UV-A content is 1:1 or less.

It is believed that during the curing step both free radical addition reaction caused by the radiation and a Michael addition reaction is occurring. Consequently, if free-radical addition reaction cure is insufficient to completely cure the composition, Michael addition reaction will complete the cure.

As mentioned above, the composition according to the present invention may be a waterborne composition, a solventborne composition or a solvent-free composition. The composition may be especially suitable for use as a high-solids or a solvent-free composition. Preferably, the theoretical volatile organic content (VOC) of the composition is less than 450 g/l, more preferably less than 350 g/l, most preferably less than 250 g/l.

The present compositions are of particular interest in coating compositions. Preferably, a two-pack composition is used. Preferably, the first component of the two-pack coating comprises the compound comprising two or more olefinically unsaturated groups as well as the compound comprising at least two mercapto-functional groups, while the second component of the composition comprises a small amount of a catalyst solution. However, if so desired, the second component may comprise, next to the catalyst, a part or the total amount of either the compound comprising olefinically unsaturated groups or the compound comprising mercapto-functional groups.

The compositions according to the present invention can be applied by conventional methods, including spraying, brushing, roller coating or dipping. However, the compositions of the present invention are particularly suitable for application by an external mixing apparatus, one wherein a liquid composition comprising a compound comprising two or more olefinically unsaturated groups comprising at least one electron-withdrawing functionality linked to a carbon atom of the unsaturated group, and a compound comprising at least two mercapto-functional groups, is sprayed via a spray nozzle, with a small amount of a liquid catalyst composition being injected into the spray of the sprayed composition. The thickness of the coating (dry film thickness) is typically from 5 to 160 microns.

The compositions according to the invention can be used on various substrates, in particular wood, plastics, and metal substrates such as aluminium, steel, or galvanized steel, for industrial applications of any kind. The composition can be used as a primer, basecoat or clear topcoat. The compositions can also be used as adhesives and putties. The compositions are particularly advantageous for use as a coating for car repair, since it is easily sprayable and can be applied at ambient temperatures.

## Claims

1. A process for forming a coating on a substrate comprising:
(a) depositing on a substrate a curable composition comprising:
(i) a polyene containing an electron-withdrawing group,
(ii) a polythiol,
(iii) a Michael addition catalyst;
(b) forming a substantially continuous film of the curable composition on the substrate;
(c) exposing the film to radiation to partially cure the composition;
(d) subjecting the film to conditions sufficient to cause a Michael addition reaction of (i) and (ii); whereby the cure in steps (c) and (d) being sufficient to cure the composition
- in which the substrate is irregularly shaped such that the curable composition is not uniformly exposed to the ultraviolet radiation resulting in incomplete cure in step (c); or
- the curable composition contains one or more pigments that absorb ultraviolet radiation resulting in incomplete cure in step (c); or
- in which the film has a surface region and an interior region beneath the surface and is substantially completely cured at the surface in step (c) but incompletely cured in the interior region of the film.

2. The process of claim 1 in which the polyene has the structural formula A-(X)ₘ where A is an organic moiety, preferably containing groups selected from ester and urethane, X is an olefinically unsaturated moiety, preferably selected from -C(O)CR=CH₂ where R is hydrogen or methyl and m is at least 2, preferably m is from 2 to 4.

3. The process of claim 2 in which A is derived from a polyisocyanate.

4. The process of claim 2 in which A-(X)ₘ is a polyurethane (meth)acrylate or a polyester (meth)acrylate.

5. The process of claim 1 in which the polythiol has the structural formula R-(SH)ₙ where R is an organic moiety and n is at least 2, preferably n is from 2 to 6.

6. The process of claim 5, in which R contains ester groups or in which R is derived from a polyol.

7. The process of claim 5 in which the polythiol is the reaction product of a thiol-functional organic acid and a polyol.

8. The process of claim 1 in which the Michael addition catalyst is an amine, preferably the amine is a primary or secondary amine including blocked primary and secondary amines.

9. The process of claim 1 in which the polyene is present in the composition in amounts of 80 to 98 percent by weight and the polythiol is present in amounts of 2 to 20 percent by weight; the percentages by weight being based on weight of polyene and polythiol or in which the polyene is present in amounts of 90 to 95 percent by weight and the polythiol is present in amounts of 5 to 10 percent by weight; the percentages by weight being based on weight of polyene and polythiol.

10. The process of claim 1 in which the Michael addition catalyst is present in the composition in amounts of 0.001 to 5 percent by weight based on weight of polyene and polythiol.

11. The process of claim 1 in which the topcoat is exposed to ultraviolet radiation falling within the 200-400 nanometer wavelength interval.

12. The process of claim 1 in which the curing in steps (c) and (d) occurs simultaneously.

13. The process of claim 1 in which the curing in steps (c) and (d) occurs at ambient temperature.

## Patentansprüche

1. Verfahren zur Ausbildung einer Beschichtung auf einem Substrat, umfassend:
(a) Abscheiden einer härtbaren Zusammensetzung auf einem Substrat, die enthält:
(i) ein Polyethylen, das eine Elektronen ziehende Gruppe enthält,
(ii) ein Polythiol,
(iii) einen Michael-Additions-Katalysator,
(b) Ausbilden eines kontinuierlichen Films der härtbaren Zusammensetzung auf dem Substrat;
(c) Aussetzen des Films an Strahlung, um die Zusammensetzung teilweise zu härten;
(d) Unterwerfen des Films an Bedingungen, die ausreichend sind, um eine Michael-Additionsreaktion von (i) und (ii) zu bewirken, wobei die Härtung in den Schritten (c) und (d) ausreichend ist, um die Zusammensetzung zu härten,
- bei dem das Substrat ungleichmäßig geformt ist, sodass die härtbare Zusammensetzung nicht einheitlich UV-Strahlung ausgesetzt wird, was zur unvollständigen Härtung in Schritt (c) führt, oder
- die härtbare Zusammensetzung ein oder mehrere Pigmente enthält, die UV-Strahlung absorbieren, was zur unvollständigen Härtung in Schritt (c) führt, oder
- bei dem der Film einen Oberflächenbereich und einen inneren Bereich unterhalb der Oberfläche aufweist und im Wesentlichen vollständig auf der Oberfläche in Schritt (c) gehärtet ist, aber im inneren Bereich des Films unvollständig gehärtet ist.

2. Verfahren nach Anspruch 1, bei dem das Polyen die Strukturformel A-(X)ₘ aufweist, worin A eine organische Einheit ist, die vorzugsweise Gruppen enthält, die aus Ester und Urethan ausgewählt sind, X eine olefinisch ungesättigte Einheit ist, vorzugsweise ausgewählt aus-C(O)CR=CH₂, worin R gleich Wasserstoff oder Methyl ist und m wenigstens 2 ist, vorzugsweise m gleich 2 bis 4 ist.

3. Verfahren nach Anspruch 2, bei dem A sich von einem Polyisocyanat ableitet.

4. Verfahren nach Anspruch 2, bei dem A-(X)ₘ ein Polyurethan-(Meth)acrylat oder ein Polyester-(Meth)acrylat ist.

5. Verfahren nach Anspruch 1, bei dem das Polythiol die Strukturformel R-(SH)ₙ aufweist, worin R eine organische Einheit ist und n wenigstens 2 ist, vorzugsweise n gleich 2 bis 6 ist.

6. Verfahren nach Anspruch 5, bei dem R Estergruppen enthält oder bei dem R sich von einem Polyol ableitet.

7. Verfahren nach Anspruch 5, bei dem das Polythiol das Reaktionsprodukt einer thiolfunktionellen organischen Säure und eines Polyols ist.

8. Verfahren nach Anspruch 1, bei dem der Michael-Additions-Katalysator ein Amin ist, vorzugsweise das Amin ein primäres oder sekundäres Amin, einschließlich blockierter primärer und sekundärer Amine, ist.

9. Verfahren nach Anspruch 1, bei dem das Polyen in der Zusammensetzung in Mengen von 80 bis 98 Gew.-% vorhanden ist und das Polythiol in Mengen von 2 bis 20 Gew.-% vorhanden ist, wobei die Gewichtsprozentangaben sich auf das Gewicht von Polyen und Polythiol beziehen, oder bei dem das Polyen in Mengen von 90 bis 95 Gew.-% vorhanden ist und das Polythiol in Mengen von 5 bis 10 Gew.-% vorhanden ist, wobei die Prozentangaben sich auf das Gewicht von Polyen und Polythiol beziehen.

10. Verfahren nach Anspruch 1, bei dem der Michael-Additions-Katalysator in der Zusammensetzung in Mengen von 0,001 bis 5 Gew.-%, bezogen auf das Gewicht von Polyen und Polythiol, vorhanden ist.

11. Verfahren nach Anspruch 1, bei dem der Decklack mit ultravioletter Strahlung innerhalb des 200- bis 400-Nanometer-Wellenlängenintervalls belichtet wird.

12. Verfahren nach Anspruch 1, bei dem die Härtung in Schritten (c) und (d) gleichzeitig stattfindet.

13. Verfahren nach Anspruch 1, wobei die Härtung in Schritten (c) und (d) bei Umgebungstemperatur stattfindet.

## Revendications

1. Procédé de formation d'un revêtement sur un substrat, comportant les étapes suivantes :
a) déposer sur un substrat une composition durcissable comprenant :
i) un polyène comportant un groupe électro-attracteur,
ii) un polythiol,
iii) et un catalyseur pour addition de Michael ;
b) former sur le substrat un film continu de cette composition durcissable ;
c) exposer le film à un rayonnement, pour faire partiellement durcir la composition ;
d) et mettre le film dans des conditions suffisantes pour provoquer une réaction d'addition de Michael entre les composants (i) et (ii) ;
étant entendu que le durcissement lors des étapes (c) et (d) est suffisant pour que la composition soit durcie,
dans lequel
- le substrat est de forme si irrégulière que la composition durcissable n'est pas exposée uniformément au rayonnement ultraviolet, ce qui aboutit à un durcissement incomplet lors de l'étape (c) ;
- ou la composition durcissable contient un ou plusieurs pigment(s) qui absorbe(nt) du rayonnement ultraviolet, ce qui aboutit à un durcissement incomplet lors de l'étape (c) ;
- ou le film comporte une zone de surface et une zone intérieure, en dessous de la surface, et se trouve, lors de l'étape (c), pratiquement complètement durci en surface, mais incomplètement durci à l'intérieur.

2. Procédé conforme à la revendication 1, dans lequel le polyène présente la formule structurale A-(X)ₘ dans laquelle :
- A représente un fragment organique, comportant de préférence des groupes choisis parmi des groupes de type ester ou uréthane,
- X représente un fragment à insaturation oléfinique, de préférence choisi parmi ceux de formule -C(O)CR=CH₂ où R représente un atome d'hydrogène ou un groupe méthyle,
- et l'indice m vaut au moins 2 et de préférence de 2 à 4.

3. Procédé conforme à la revendication 2, dans lequel le fragment symbolisé par A dérive d'un polyisocyanate.

4. Procédé conforme à la revendication 2, dans lequel la formule A-(X)ₘ représente un polyuréthane à groupes (méth)acrylate ou un polyester à groupes (méth)acrylate.

5. Procédé conforme à la revendication 1, dans lequel le polythiol présente la formule structurale R-(SH)ₙ dans laquelle :
- R représente un fragment organique,
- et l'indice n vaut au moins 2 et de préférence de 2 à 6.

6. Procédé conforme à la revendication 5, dans lequel le fragment symbolisé par R comporte des groupes de type ester, ou dérive d'un polyol.

7. Procédé conforme à la revendication 5, dans lequel le polythiol est le produit de réaction d'un polyol et d'un acide organique à fonction(s) thiol.

8. Procédé conforme à la revendication 1, dans lequel le catalyseur pour addition de Michael est une amine, laquelle amine est de préférence une amine primaire ou secondaire, y compris les amines primaires ou secondaires bloquées.

9. Procédé conforme à la revendication 1, dans lequel, dans la composition,
- le polyène se trouve présent en une proportion de 80 à 98 % en poids et le polythiol se trouve présent en une proportion de 2 à 20 % en poids, ces pourcentages pondéraux étant rapportés au poids de polyène et de polythiol,
- ou bien le polyène se trouve présent en une proportion de 90 à 95 % en poids et le polythiol se trouve présent en une proportion de 5 à 10 % en poids, ces pourcentages pondéraux étant rapportés au poids de polyène et de polythiol.

10. Procédé conforme à la revendication 1, dans lequel le catalyseur pour addition de Michael se trouve présent dans la composition en une proportion de 0,001 à 5 %, en poids rapporté au poids de polyène et de polythiol

11. Procédé conforme à la revendication 1, dans lequel la couche de dessus est exposée à un rayonnement ultraviolet dont la longueur d'onde se situe dans l'intervalle allant de 200 à 400 nanomètres.

12. Procédé conforme à la revendication 1, dans lequel les opérations de durcissement des étapes (c) et (d) sont réalisées simultanément.

13. Procédé conforme à la revendication 1, dans lequel, dans les étapes (c) et (d), le durcissement est opéré à température ambiante.
